# EUROPEAN PATENT APPLICATION

(11) **EP 2 431 800 A1**
(43) Date of publication of application: **21.03.2012**
(21) Application number: 10781398.2
(22) Date of filing: 30.09.2010
(51) Int. Cl.: G02F 1/13357, G02B 6/00, F21V 8/00

(54) **BACKLIGHT MODULE AND DISPLAY DEVICE**

(30) Priority: 17.06.2010 CN 201010206710
(71) Applicant: Shenzhen China Star Optoelectronics Technology Co., Shenzhen, Guangdong 518106 (CN)
(72) Inventor: HE, Chengming, Shenzhen Guangdong 518106 (CN); KUO, Yicheng, Shenzhen Guangdong 518106 (CN); REN, Jie, Shenzhen Guangdong 518106 (CN); ZHENG, Weiwei, Shenzhen Guangdong 518106 (CN)
(74) Representative: Charles, Glyndwr
(86) International application number: PCT/CN2010/077536
(87) International publication number: WO 2011/157016

(57) **Abstract**

The present invention provides a backlight module (100) and a display apparatus. The backlight module (100) comprises a plurality of first light guide units (140, 240, 440), a plurality of first light sources (120, 220, 320, 421, 422, 423, 424), a plurality of second light guide units (150, 250, 450), a plurality of second light sources (130, 230, 330, 431, 432, 433, 434) and a reflective layer (160, 260, 460). The first light sources (120, 220, 320, 421, 422, 423, 424) are disposed at one side of the first light guide units (140, 240, 440). The second light guide units (150, 250, 450) are disposed on the first concave portions (143, 243) of the first light guide units (140, 240, 440). The second light sources (130, 230, 330, 431, 432, 433, 434) are disposed at one side of the second light guide units (150, 250, 450). The reflective layer (160, 260, 460) is formed between the first light guide units (150, 250, 450) and the second light guide units (150, 250, 450). The present invention can enhance the number of the locally dimmed regions and the independent light adjustability of each region.

## Description

### FIELD OF THE INVENTION

The present invention relates to a backlight module and a display apparatus, and more particularly to a backlight module and a display apparatus capable of local dimming.

### BACKGROUND OF THE INVENTION

Liquid crystal displays (LCDs) have been widely applied in electrical products. Currently, most of LCDs are backlight type LCDs, and comprise a liquid crystal panel and a backlight module. According to the position of the light sources, the backlight module can be classified into a side-light type or a direct-light type, in order to provide LCDs with backlight sources.

Currently, the backlight module of the LCD can have a plurality of lighting regions, and the brightness in the different lighting regions can be adjusted. That is, a local dimming can be performed. For the local dimming of a traditional backlight module, light emitting diode (LED) chips are generally arranged behind the liquid crystal panel, and the local dimming is achieved by controlling the lighting of the LEDs in different regions. However, a lot of LEDs are needed in this local dimming method, thereby raising the cost and consumed power of the LEDs, and the thickness of the backlight module is also susceptible to be increased.

In another local dimming method, LED chips are disposed at two opposite side of a light guide plate, and the light guide plate has different lighting regions by controlling the lighting of the different LEDs. However, in this local dimming method, the lighting of a middle region of the light guide plate is uneasy to be dimmed. That is, the regions of the backlight module capable of locally dimming are fewer.

As a result, it is necessary to provide a backlight module and a display apparatus to solve the problems existing in the conventional technologies, as described above.

### SUMMARY OF THE INVENTION

A primary object of the present invention is to provide a backlight module, wherein the backlight module comprises: a plurality of first light guide units having a plurality of first concave portions; a plurality of first light sources disposed at one side of the first light guide units; a plurality of second light guide units disposed on the first concave portions of the first light guide units; a plurality of second light sources disposed at one side of the second light guide units; and a reflective layer formed between the first light guide units and the second light guide units.

A secondary object of the present invention is to provide a display apparatus, wherein the display apparatus comprises a display panel and a backlight module. The backlight module comprises: a plurality of first light guide units a plurality of first light sources, a plurality of second light guide units; first light guide units; a plurality of second light sources, and a reflective layer, wherein the first light guide units have a plurality of first concave portions; the plurality of first light sources are disposed at one side of the first light guide units; the second light guide units are disposed on the first concave portions of the first light guide units; the second light sources are disposed at one side of the second light guide units; and a reflective layer is formed between the first light guide units and the second light guide units.

In one embodiment, light output surfaces of the second light guide units and light output surfaces of the first light guide units are positioned at a common plane.

In one embodiment, the backlight module further comprises: a plurality of third light guide units; and a plurality of third light sources disposed at one side of the third light guide units; wherein the second light guide units have a plurality of second concave portions, and the third light guide units are disposed on the second concave portions of the second light guide units.

In one embodiment, the first light sources or the second light sources include circuit broads and lighting elements, and the lighting elements are disposed on the circuit broads.

In one embodiment, the first light sources and the second light sources are disposed on the circuit broads, and the lighting of the first light sources and the second light sources are controlled by the circuit broads.

In one embodiment, the first light guide units and the second light guide units are in the form of an elongated shape.

In one embodiment, the backlight module further comprises optical films disposed on the first light guide units and the second light guide units.

In one embodiment, the first light guide units are in the form of an L-shaped structure.

The backlight module and the display apparatus of the present invention can arrange the light sources disposed at both sides of the light guide plate for local dimming, thereby reducing the cost and energy consumption of the light sources. Moreover, the backlight of the present invention can enhance the number of the locally dimmed regions and the independent light adjustability of each region.

The structure and the technical means adopted by the present invention to achieve the above and other objects can be best understood by referring to the following detailed description of the preferred embodiments and the accompanying drawings:

### DESCRIPTION OF THE DRAWINGS

Fig. 1 is a schematic diagram showing a backlight module and a display panel according to a first embodiment of the present invention;
Fig. 2A is a cross-sectional view showing the backlight module according to a first embodiment of the present invention;
Fig. 2B is a cross-sectional view showing light sources and light guide units according to the first embodiment of the present invention;
Fig. 3 is a schematic diagram showing the light sources according to the first embodiment of the present invention;
Fig. 4 is a top view showing the light sources and the light guide units according to the first embodiment of the present invention;
Fig. 5 is a cross-sectional view showing a backlight module according to a second embodiment of the present invention;
Fig. 6 is a schematic diagram showing light sources according to a third embodiment of the present invention;
Fig. 7A is a top view showing light sources and light guide units according to a fourth embodiment of the present invention; and
Fig. 7B is a cross-sectional view showing the light sources and the light guide units according to the fourth embodiment of the present invention.

### DETAILED DESCRIPTION OF THE PREFERRED EMBODIMENTS

The following embodiments are exemplified by referring to the accompanying drawings, for describing specific embodiments implemented by the present invention. Furthermore, directional terms described by the present invention, such as upper, lower, front, back, left, right, inner, outer, side and etc., are only directions by referring to the accompanying drawings, and thus the used directional terms are used to describe and understand the present invention, but the present invention is not limited thereto.

In the drawings, like reference numerals indicate like components or items.

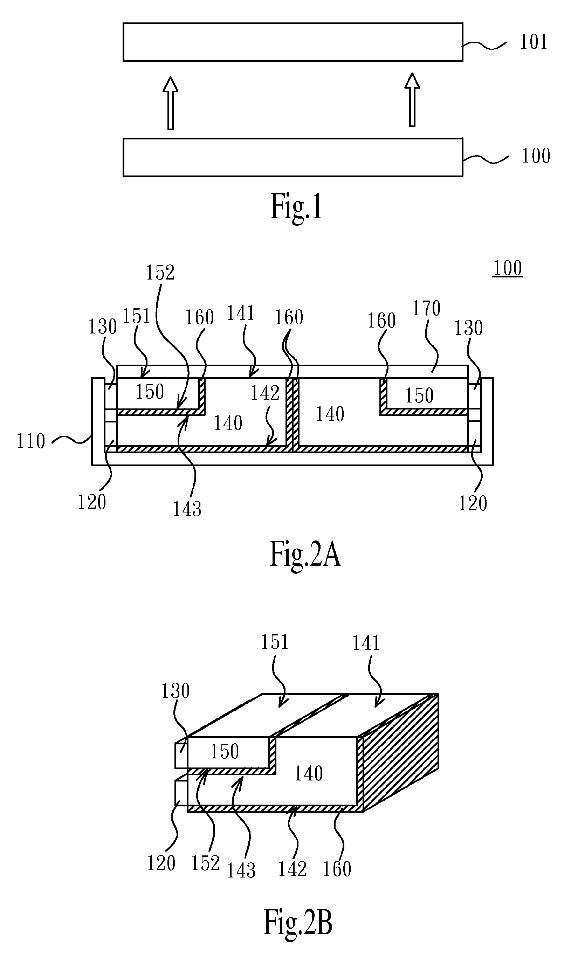

Referring to Fig. 1, Fig. 2A and Fig. 2B, Fig. 1 is a schematic diagram showing a backlight module and a display panel according to a first embodiment of the present invention, and Fig. 2 A is a cross-sectional view showing the backlight module according to the first embodiment of the present invention, and Fig. 2 B is a cross-sectional view showing light sources and light guide units according to the first embodiment of the present invention. The backlight module 100 of the present embodiment may be for example an edge-lighting type backlight module and disposed opposite to a display panel 101 (such as a liquid crystal display panel), thereby forming a display apparatus (an LCD apparatus). The backlight module 100 may comprise a casing 110, a plurality of first light sources 120, a plurality of second light sources 130, a plurality of first light guide units 140, a plurality of second light guide units 150, a reflective layer 160 and optical films 170. The casing 110 is configured to carry the light sources 120, 130, the first light guide units 140, the second light guide units 150 and the optical films 170. The light sources 120, 130 are disposed at one side of the first light guide units 140 and the second light guide units 150 to laterally emit light into the light guide units 140, 150, and the light guide units 140, 150 guides light to output. The reflective layer 160 is formed between the first light guide units 140 and the second light guide units 150 for reflecting light and separating the first light guide units 140 and the second light guide units 150. The optical films 170 are disposed on the first light guide units 140 and the second light guide units 150 for optical improvement.

Referring to Fig. 2A again, the casing 110 of the present embodiment may be made of an opaque material, such as plastic, metal or any combination material thereof. The first light sources 120 and the second light sources 130 are preferably cold cathode fluorescent lamps (CCFLs), light emitting diodes (LEDs), organic light emitting diodes (OLEDs), electro-luminescence (EL) devices, light bars or any combination thereof.

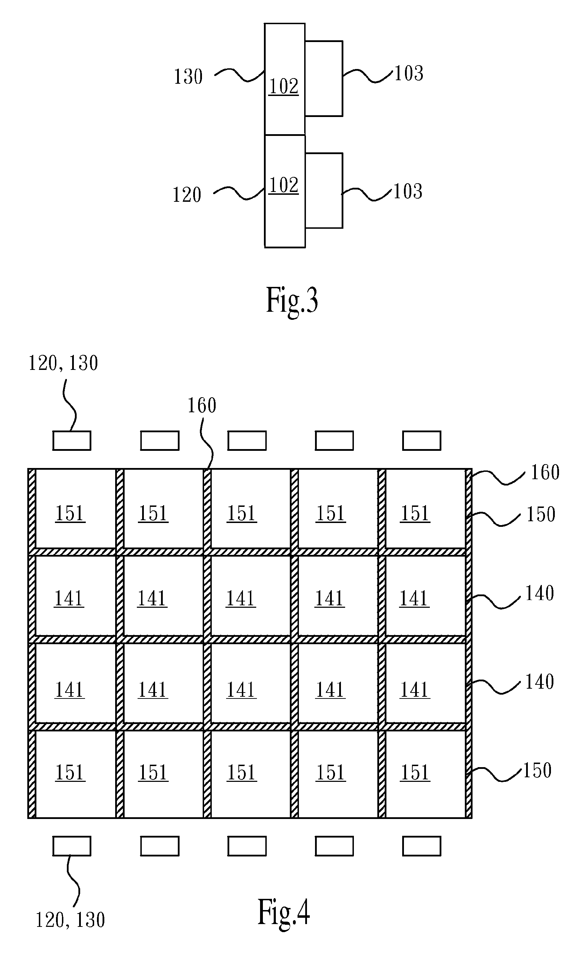

Referring to Fig. 3, a schematic diagram showing the light sources according to the first embodiment of the present invention is illustrated. The first light sources 120 or the second light sources 130 may be for example light bars which include circuit broads 102 and lighting elements 103 (such as LED chips). The circuit broads 102 may be printed circuit boards (PCB) or Flexible Printed Circuits (FPC). The lighting elements 103 are disposed on the circuit broads 102.

Referring to Fig. 2A and Fig. 2B again, the first light sources 120 of the present embodiment are disposed at one side of the first light guide units 140 for emitting light into the first light guide units 140. The second light sources 130 are disposed at one side of the second light guide units 150 for emitting light into the second light guide units 150, wherein the first light sources 120 and the second light sources 130 are arranged abreast in the same side of the backlight module 100.

Referring to Fig. 2A and Fig. 2B again, the first light guide units 140 and the second light guide units 150 of the present embodiment may be made by the method of injection molding, and the material thereof may be photo-curable resin, polymethylmethacrylate (PMMA) or polycarbonate (PC). The first light guide units 140 and the second light guide units 150 may be assembled as a light guide plate for guiding the light of the light sources 120, 130 toward the liquid crystal display panel 101. Each of the light guide units can guide the light of the light sources 120, 130 correspondingly to form a lighting region. Therefore, the above-mentioned first light guide units 140 and the second light guide units 150 can form a plurality of lighting regions on the backlight module 100, and the lighting regions of the backlight module 100 can be locally dimmed, i.e. the lighting regions thereof can have identical or different brightness.

Referring to Fig. 2A and Fig. 2B again, the first light guide units 140 of the present embodiment have light output surfaces 141, light reflection surfaces 142 and first concave portions 143. The light output surfaces 141 are formed on one side of the first light guide units 140 and face to the liquid crystal display panel 101. The light output surfaces 141 may include a frosted surface or a plurality of scattered patterns to uniform light outputted from the first light guide units 140, and thus the phenomenon of Mura is prevented. In one embodiment, the light output surfaces 141 may include a plurality of protruding structures (not shown) to modify the direction of light, thereby condensing light and enhancing the brightness thereof, wherein the protruding structures may be continuously convex or concave structures, such as prism-shaped structures or semicircle-shaped structures. The light reflection surfaces 142 are formed at another side of the first light guide units 140 and opposite to the light output surfaces 141 for reflecting light thereto. In the present embodiment, the light reflection surfaces 142 of the first light guide units 140 are parallel to the light output surfaces 141. Furthermore, the light reflection surfaces 142 also generally comprise the surfaces at one side away from the first concave portions 143. The light reflection surfaces 142 may have light guiding structures (not shown) formed thereon to guide the light to emit out of the light output surfaces 141. The light guiding structures of the light reflection surfaces 142 may be a plurality of continuous V-cut structures, a frosted surface, or a plurality of scattered patterns, thereby guiding the light of the first light sources 120 to be outputted from the light output surfaces 141.

Referring to Fig. 2A and Fig. 2B again, the first concave portions 143 of the first light guide units 140 are formed along a horizontal direction in the drawings. The first concave portions 143 are formed between the light output surfaces 141 and the second light sources 130 for receiving the second light guide units 150. Accordingly, the shape and size of the first concave portions 143 of the first light guide units 140 are preferably identical to, slightly smaller or slightly larger than that of the second light guide units 150. Furthermore, the first light guide units 140 may be in the form of an L-shaped structure. When assembling the backlight module 100, the second light guide units 150 can be fitted into the first concave portions 143 of the first light guide units 140. The first light sources 120 are positioned corresponding to one side of the first light guide units 140, and the second light sources 130 are positioned corresponding to one side of the second light guide units 150, wherein the first light guide units 140 and the second light guide units 150 can be commonly assembled to form a rectangular plate with a predetermined thickness.

Referring to Fig. 2A and Fig. 2B again, the second light guide units 150 of the present embodiment are disposed on the first concave portions 143 of the first light guide units 140. The second light guide units 150 have light output surfaces 151 and light reflection surfaces 152. The light output surfaces 151 are formed on one side of the second light guide units 150 and face to the liquid crystal display panel 101, wherein the light output surfaces 151 of the second light guide units 150 and the light output surfaces 141 of the first light guide units 140 are substantially positioned at a common plane. The light output surfaces 151 may include a frosted surface or a plurality of scattered patterns to uniform light outputted from the second light guide units 150, and thus the phenomenon of Mura is prevented. In one embodiment, the light output surfaces 151 may include a plurality of protruding structures (not shown) to modify the direction of light, thereby condensing light and enhancing the brightness thereof, wherein the protruding structures may be continuously convex or concave structures, such as prism-shaped structures or semicircle-shaped structures. The light reflection surfaces 152 are formed opposite to the light output surfaces 151 for reflecting light to the light output surfaces 151. In the present embodiment, the light reflection surfaces 152 of the second light guide units 150 are parallel to the light output surfaces 151. Furthermore, the light reflection surfaces 152 also generally comprise the surfaces at one side adjacent to the first concave portions 143. The light reflection surfaces 152 may have light guiding structures (not shown) formed thereon to guide the light to emit out of the light output surfaces 151. The light guiding structures of the light reflection surfaces 152 may be continuous V-shaped structures (V-cut structures), a frosted surface, or a plurality of scattered patterns, thereby guiding the light of the second light sources 130 to be outputted from the light output surfaces 151.

Referring to Fig. 2A again, the reflective layer 160 (or reflective sheet) of the present embodiment is formed between the light guide units 140, 150, such as formed between the first light guide units 140 and the second light guide units 150 for separating the first light guide units 140 and the second light guide units 150, and the light interaction between the light guide units can be prevented. In the present embodiment, the reflective layer 160 is further formed on the light reflection surfaces 142 of the first light guide units 140 to reflect light. However, the reflective layer 160 can be also formed on the L-shaped light reflection surfaces of the first concave portions 143 of the second light guide units 150 to reflect light. Therefore, in the present embodiment, the reflective layer 160 is formed on the surfaces of the first light guide units 140 and the second light guide units 150, and only the light input surfaces (not shown, corresponding to the light sources 120, 130) for allowing light to enter and the light output surfaces 141, 151 thereof are exposed. The reflective layer 160 may be made of a highly reflective material, such as Ag, Al, Au, Cr, Cu, In, Ir, Ni, Pt, Re, Rh, Sn, Ta, W, Mn, alloy of any combination thereof, white reflective paint with etiolation-resistant and heat-resistant properties or any combination thereof for reflecting light. Furthermore, when the backlight module 100 is constructed by multiple set of the first light guide units 140 and the second light guide units 150. The reflective layer 160 (or reflective sheet) can be also formed between two adjacent first light guide units 140 for separating the two first light guide units 140, and thus the light interaction there between can be avoided. In the present embodiment, the reflective layer 160 are preferably formed between the light reflection surfaces 142 of the first light guide units 140 for reflecting light to each other.

Referring to Fig. 2A again, the optical films 170 of the present embodiment may be a diffuser, a prism sheet, a turning prism sheet, a brightness enhancement film (BEF), a dual brightness enhancement film (DBEF), a diffused reflective polarizer film (DRPF) or any combination thereof disposed above the light guide plate which is constructed by the light guide units 140, 150 for optical improvement.

When the second light sources 130 are lighting, the light of the second light sources 130 can be guided out of the light output surfaces 151 by the second light guide units 150, thereby forming a lighting region. When the first light sources 120 are lighting, the light of the second light sources 130 can not enter the first light guide units 140 due to the reflecting of the reflective layer 160 formed between the first light guide units 140 and the second light guide units 150. At this time, the light of the first light sources 120 can enter the first light guide units 140 and is emitted outward from the light output surfaces 141 to outside, thereby forming another lighting region. By the reflecting of the reflective layer 160, the light of the first light sources 120 can not enter the second light guide units 150.

Referring to Fig. 4, a top view showing the light sources and the light guide units according to the first embodiment of the present invention is illustrated. In the present embodiment, the first light sources 120 are disposed at two opposite sides of the backlight module 100, respectively. The second light sources 130 are also disposed at two opposite sides of the backlight module 100, respectively. Furthermore, the first light sources 120 and the second light sources 130 are disposed at the same sides. The first light guide units 140 are arranged in a matrix array, and the light output surfaces 141 thereof are located at the middle position, i.e. the lighting regions formed by the first light guide units 140 are also located at the middle position. The second light guide units 150 can be assembled on the first concave portions 143 of the first light guide units 140 and positioned at two sides of the backlight module 100, i.e. the lighting regions formed by the second light guide units 150 can be positioned at the two sides of backlight module 100 and adjacent to the second light sources 130. Furthermore, the reflective layer 160 is formed between each two adjacent light guide units. For example, the reflective layer 160 is formed between the first light guide units 140 and the second light guide units 150, between the two adjacent first light guide units 140 or between the two adjacent second light guide units 150. When performing the local dimming of the backlight module 100, the brightness of the light sources 120, 130 corresponding to the first light guide units 140 and the second light guide units 150 can be dimmed, and the light thereof can be guided to the light output surfaces 141, 151 by the correspondent the first light guide units 140 and the second light guide units 150. Therefore, the lighting regions with different brightness can be formed on the light guide plate constructed by the light guide units 140, 150, thereby achieving the local dimming.

Accordingly, the light sources 120, 130 can be disposed at two sides of the light guide plate of the backlight module 100 of the present embodiment for local dimming, and the number of the light sources can be reduced, thereby reducing the cost and energy consumption thereof. Moreover, since the light regions can be formed at the middle position of the backlight module 100 by the first light guide units 140 using the correspondent first light sources 120, the number of the dimmed regions and the independent light adjustability of each region can be enhanced.

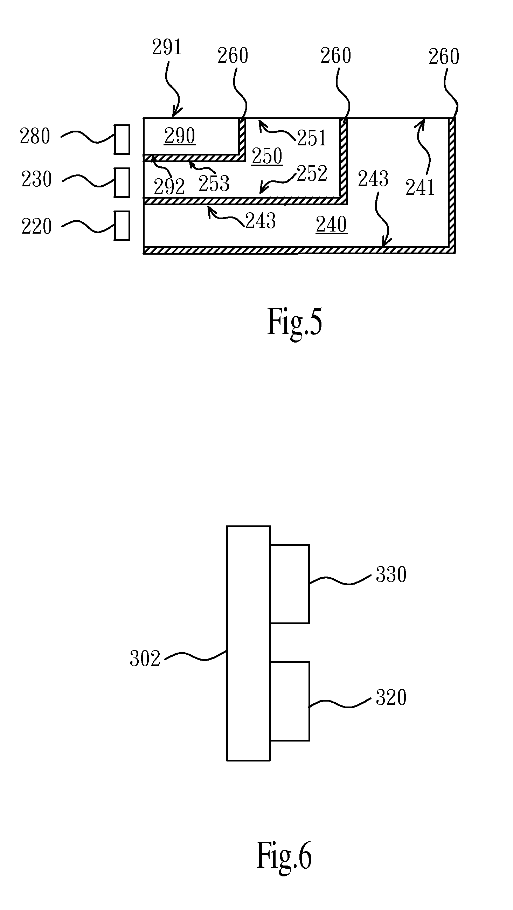

Referring to Fig. 5, a cross-sectional view showing a backlight module according to a second embodiment of the present invention is illustrated. Only the difference between the embodiment and the first embodiment are described hereinafter, and the similar construction there between is not stated in detail herein. In comparison with the first embodiment, the backlight module of the second embodiment further comprises a plurality of third light sources 280 and a plurality of third light guide units 290. At this time, the first light guide units 240 have light output surfaces 241, light reflection surfaces 242 and first concave portions 243; the second light guide units 250 have light output surfaces 251, light reflection surfaces 252 and second concave portions 253; and the third light guide units 290 have light output surfaces 291 and light reflection surfaces 292. The reflective layer 260 is formed between each adjacent two of the first light guide units 240, the second light guide units 250 and the third light guide units 290. In the present embodiment, the first light sources 220, the second light sources 230 and the third light sources 280 can be arranged abreast in the same side of the backlight module. The first light guide units 240 correspond to the first light sources 220. The second light guide units 250 correspond to the second light sources 230 and insert into the first concave portions 243 of the first light guide units 240. The third light guide units 290 correspond to the third light sources 280 and insert into the second concave portions 253 of the second light guide units 250, wherein the light output surfaces 241, 251, 291 are substantially located at a common plane. Therefore, the light guide units 240, 250, 290 can be assemble to form a light guide plate for forming more lighting regions, i.e. the backlight module can have more lighting regions for local dimming.

Referring to Fig. 6, a schematic diagram showing the light sources according to a third embodiment of the present invention is illustrated. Only the difference between the embodiment and the first embodiment are described hereinafter, and the similar construction there between is not stated in detail herein. In comparison with the first embodiment, the first light sources 320 and the second light sources 330 of the third embodiment can be arranged abreast in the same circuit broad 302, the lighting thereof are controlled by the circuit broad 302. For example, the light sources 320, 330 can be LED chips disposed on the circuit broad 302 for emitting light to the light guide units 140, 150.

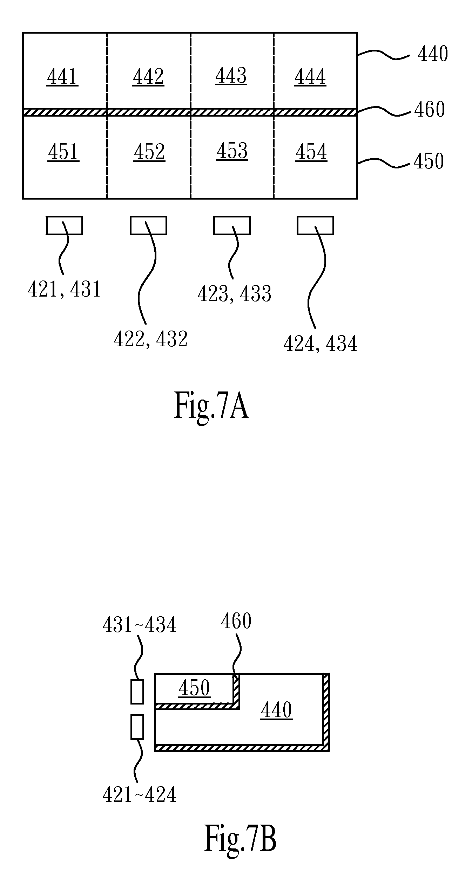

Referring to Fig. 7A and Fig. 7B, Fig. 7A is a top view showing the light sources and the light guide units according to a fourth embodiment of the present invention, and Fig. 7B is a cross-sectional view showing the light sources and the light guide units according to a fourth embodiment of the present invention. Only the difference between the embodiment and the first embodiment are described hereinafter, and the similar construction there between is not stated in detail herein. In comparison with the first embodiment, the first light guide units 440 can be in the form of an elongated shape corresponding to a plurality of first light sources 421, 422, 423, 424, and a plurality of lighting regions 441, 442, 443, 444 can be formed by the lighting of the first light sources 421-424, i.e. the lighting regions 441-444 can be simultaneously formed on a single elongated first light guide units 440. The second light guide units 450 can be also in the form of an elongated shape corresponding to a plurality of second light sources 431, 432, 433, 434, and a plurality of lighting regions 451, 452, 453, 454 can be formed by the lighting of the second light sources 431-434, i.e. the lighting regions 451-454 can be simultaneously formed on a single elongated second light guide units 450. The reflective layer 460 is formed between the first light guide units 440 and the second light guide units 450. Therefore, each of the lighting regions 441-444, 451-454 can be locally dimmed by controlling the lighting of the light sources 421-424, 431-434.

As described above, the backlight module and the display apparatus of the present invention can allow the light sources being disposed at both sides of the light guide plate for local dimming, thereby reducing the cost and energy consumption of the light sources. Furthermore, the number of the locally dimmed regions and the independent light adjustability of each region of the backlight module of the present invention can be enhanced.

The present invention has been described with a preferred embodiment thereof and it is understood that many changes and modifications to the described embodiment can be carried out without departing from the scope and the spirit of the invention that is intended to be limited only by the appended claims.

## Claims

1. A display apparatus, **characterized in that**: the display apparatus comprises:
a display panel (101); and
a backlight module (100) comprising:
a plurality of first light guide units (140, 240, 440) having a plurality of first concave portions (143, 243);
a plurality of first light sources (120, 220, 320, 421, 422, 423, 424) disposed at one side of the first light guide units (140, 240, 440);
a plurality of second light guide units (150, 250, 450) disposed on the first concave portions (143, 243) of the first light guide units (140, 240, 440);
a plurality of second light sources (130, 230, 330, 431, 432, 433, 434) disposed at one side of the second light guide units (150, 250, 450); and
a reflective layer (160, 260, 460) formed between the first light guide units (140, 240, 440) and the second light guide units (150, 250, 450);
wherein light output surfaces (141) of the first light guide units (140, 240, 440) are located at the middle position of the backlight module (100), and the first light guide units (140, 240, 440) are in the form of an L-shaped structure.

2. A display apparatus, **characterized in that**: the display apparatus comprises:
a display panel (101); and
a backlight module (100) comprising:
a plurality of first light guide units (140, 240, 440) having a plurality of first concave portions (143, 243);
a plurality of first light sources (120, 220, 320, 421, 422, 423, 424) disposed at one side of the first light guide units (140, 240, 440);
a plurality of second light guide units (150, 250, 450) disposed on the first concave portions (143, 243) of the first light guide units (140, 240, 440);
a plurality of second light sources (130, 230, 330, 431, 432, 433, 434) disposed at one side of the second light guide units (150, 250, 450); and
a reflective layer (160, 260, 460) formed between the first light guide units (140, 240, 440) and the second light guide units (150, 250, 450).

3. A backlight module (100), **characterized in that**: the backlight module (100) comprises:
a plurality of first light guide units (140, 240, 440) having a plurality of first concave portions (143, 243);
a plurality of first light sources (120, 220, 320, 421, 422, 423, 424) disposed at one side of the first light guide units (140, 240, 440);
a plurality of second light guide units (150, 250, 450) disposed on the first concave portions (143, 243) of the first light guide units (140, 240, 440);
a plurality of second light sources (130, 230, 330, 431, 432, 433, 434) disposed at one side of the second light guide units (150, 250, 450); and
a reflective layer (160, 260, 460) formed between the first light guide units (140, 240, 440) and the second light guide units (150, 250, 450).

4. The backlight module (100) according to Claim 3, **characterized in that**: light output surfaces (151) of the second light guide units (150, 250, 450) and light output surfaces (141) of the first light guide units (140, 240, 440) are positioned at a common plane.

5. The backlight module (100) according to Claim 3, **characterized in that**: light output surfaces (141) of the first light guide units (140, 240, 440) are located at the middle position of the backlight module (100).

6. The backlight module (100) according to Claim 3, **characterized in that**: the backlight module (100) further comprises:
a plurality of third light guide units (290); and
a plurality of third light sources (280) disposed at one side of the third light guide units (290);
wherein the second light guide units (150, 250, 450) have a plurality of second concave portions (253), and the third light guide units (290) are disposed on the second concave portions (253) of the second light guide units (150, 250, 450).

7. The backlight module (100) according to Claim 3, **characterized in that**: the first light sources (120, 220, 320, 421, 422, 423, 424) or the second light sources (130, 230, 330, 431, 432, 433, 434) include circuit broads (102) and lighting elements (103), and the lighting elements (103) are disposed on the circuit broads (102).

8. The backlight module (100) according to Claim 3, **characterized in that**: the first light sources (120, 220, 320, 421, 422, 423, 424) and the second light sources (130, 230, 330, 431, 432, 433, 434) are disposed on circuit broads (102), and the lighting of the first light sources (120, 220, 320, 421, 422, 423, 424) and the second light sources (130, 230, 330, 431, 432, 433, 434) are controlled by the circuit broads (102).

9. The backlight module (100) according to Claim 3, **characterized in that**: the first light guide units (140, 240, 440) and the second light guide units (150, 250, 450) are in the form of an elongated shape.

10. The backlight module (100) according to Claim 3, **characterized in that**: the backlight module (100) further comprises optical films (170) disposed on the first light guide units (140, 240, 440) and the second light guide units (150, 250, 450).

11. The backlight module (100) according to Claim 3, **characterized in that**: the first light guide units (150, 250, 450) are in the form of an L-shaped structure.
